# EUROPEAN PATENT APPLICATION

(11) **EP 4 459 773 A1**
(43) Date of publication of application: **06.11.2024**
(21) Application number: 22915606.2
(22) Date of filing: 29.11.2022
(51) Int. Cl.: H01M 50/403, C01B 33/159, H01M 50/434, H01M 50/44, H01M 50/443, H01M 50/451, H01M 50/454

(54) **COATING MATERIAL FOR SECONDARY BATTERY SEPARATOR AND METHOD FOR MANUFACTURING SAME, SECONDARY BATTERY SEPARATOR, AND SECONDARY BATTERY**

(30) Priority: 27.12.2021 JP 2021212291
(71) Applicant: SHIN-ETSU CHEMICAL CO., LTD., Tokyo 1000005 (JP)
(72) Inventor: OHWADA Hiroto, Annaka-shi, Gunma 379-0224 (JP); MATSUMURA Kazuyuki, Annaka-shi, Gunma 379-0224 (JP); YAGINUMA Atsushi, Annaka-shi, Gunma 379-0224 (JP); SAKATUME Yoshiteru, Tokyo 100-0005 (JP); MORIMOTO Yukio, Tokyo 100-0005 (JP)
(74) Representative: Mewburn Ellis LLP
(86) International application number: PCT/JP2022/043931
(87) International publication number: WO 2023/127375

(57) **Abstract**

Provided is a coating material for a secondary battery separator, the coating material including surface-treated spherical silica particles that have on the surfaces thereof a R¹SiO_{3/2} unit (in the formula, R¹ is a univalent hydrocarbon group having 1-20 substituted or unsubstituted carbon atoms) and a R²₃SiO_{1/2} unit (in the formula, R² is a univalent hydrocarbon group having 1-16 substituted or unsubstituted carbon atoms that are mutually the same or different), have a median diameter of 0.01-0.5 µm in a volume-based particle size distribution, and have a circularity of 0.8-1.0.

## Description

### TECHNICAL FIELD

The present invention relates to a secondary battery separator coating composition and a method for manufacturing the same, a secondary battery separator, and a secondary battery.

### BACKGROUND ART

The recent trend towards cordless electronic devices has led to active development of high-performance secondary batteries. Secondary batteries can be repeatedly used by charging and have been used in various devices. Examples of secondary batteries include nickel-cadmium batteries, nickel-hydrogen batteries, and lithium-ion batteries.

A secondary battery has two electrodes, an anode and a cathode, which are always immersed in an electrolyte solution, and further has a separator which separates the anode and the cathode, wherein the electrodes and the separator are disposed on top of each other. The type of secondary battery is optimized by electrode materials, an electrolyte, and a separator used. Of these, the separator is required to have the ability not only to structurally separate the anode and cathode, but also to electrically insulate two electrodes to avoid internal short circuits. The separator also needs to have the ability to allow ion permeation in order to drive the electrochemical reactions between the anode and cathode.

In recent years, many studies have been carried out to improve battery energy density, and separators need to have as low an internal resistance as possible to increase its ability to allow ion permeation. In addition to such high ion permeability, separators are also required to be thin from the viewpoint of devices where separators are used.

In light of such abilities required for separators, separators based on non-woven fabrics have been developed.

Non-woven fabric separators have higher heat resistance and higher porosity than common polyolefin separators and thus provide higher current density. This advantage is very effective for secondary batteries. However, such high porosity may cause micro-short circuits, or short circuits in environments where long-term charge/discharge cycles are repeated.

In light of these circumstances, the non-woven fabric separators are required to have the ability to prevent short circuits without impairing high ion permeability. One of the techniques for achieving both of the abilities is to appropriately control porosity. However, since the non-woven fabrics have various pore sizes, it is necessary to appropriately control the porosity of non-woven fabrics according to the pore size.

It is also important to prevent combustion in lithium-ion batteries. In particular, laminate-type thin lithium-ion batteries include individual battery units adjacent to each other, and may have a risk of short-circuiting or overheating to cause fires and spread combustion. To prevent battery fires caused by overheating or damage, the anodes and cathodes need to remain electrically insulated from each other even in case of firing. Therefore, the separators are required to have the ability to remain without burning out even in case of firing while maintaining insulation.

Patent Document 1 discloses, as a heat-resistant separator, a separator having various fillers coated on a porous polyolefin resin film. However, Patent Document 1 does not mention the combustion resistance of the film though it describes the heat resistance of the film.

Patent Document 2 discloses a film having inorganic spherical particles made of titanium oxide or other materials which are coated on a polypropylene film. Patent Document 2 states that coating of particles can avoid internal short-circuiting when this film is used as a separator, but it does not mention combustion or heat resistance.

In both of the cases, the films differ from non-woven fabrics in current density, and it is difficult to prevent short circuits even under high current density and maintain insulation even in case of combustion.

### PRIOR ART DOCUMENTS

### PATENT DOCUMENTS

Patent Document 1: JP-A 2013-173283
Patent Document 2: JP-T 2018-538164

### SUMMARY OF INVENTION

### TECHNICAL PROBLEM

In light of the above circumstances, an object of the present invention is to provide a secondary battery separator coating composition wherein the composition gives a secondary battery which does not impair its battery characteristics in long-term charge/discharge cycles and can maintain insulation even in case of combustion.

### SOLUTION TO PROBLEM

As a result of intensive studies to achieve the above object, the inventors of the present invention have found that application of a coating composition containing particular surface-treated spherical silica particles to a separator can provide a secondary battery which does not impair its battery characteristics in long-term charge/discharge cycles and can maintain insulation even in case of combustion, then completing the present invention.

Accordingly, the present invention provides the following embodiments.
1. A secondary battery separator coating composition containing surface-treated spherical silica particles having R¹SiO_{3/2} units (wherein R¹ is a substituted or unsubstituted monovalent hydrocarbon group having 1 to 20 carbon atoms) and R²₃SiO_{1/2} units (wherein R² which may be the same or different is a substituted or unsubstituted monovalent hydrocarbon group having 1 to 6 carbon atoms) on surfaces thereof, a median diameter in a volume-based particle size distribution of 0.01 to 0.5 µm, and a circularity of 0.8 to 1.0.
2. A method for manufacturing the secondary battery separator coating composition according to item 1, the method containing
   a step of subjecting a tetrafunctional silane compound represented by the formula (I):

   Si(OR³)₄ (I)

   wherein R³ which may be the same or different is a monovalent hydrocarbon group having 1 to 6 carbon atoms, a partial hydrolyzate thereof, or a mixture thereof to hydrolysis and condensation in the presence of a basic substance in a mixture of a hydrophilic organic solvent and water, thereby forming a mixed solvent dispersion of hydrophilic spherical silica particles containing SiO₂ units; then adding a trifunctional silane compound represented by the formula (II):

   R¹Si(OR⁴)₃ (II)

   wherein R¹ is as defined above and R⁴ which may be the same or different is a monovalent hydrocarbon group having 1 to 6 carbon atoms, a partial hydrolyzate thereof, or a mixture thereof to the mixed solvent dispersion of the hydrophilic spherical silica particles for conducting surface treatment of the hydrophilic spherical silica particles, thereby obtaining a mixed solvent dispersion of first surface-treated spherical silica particles having R¹SiO_{3/2} units (wherein R¹ is as defined above) introduced on the surfaces of the hydrophilic spherical silica particles; and next removing a portion of the hydrophilic organic solvent and water from the mixed solvent dispersion of the first surface-treated spherical silica particles to concentrate the mixed solvent dispersion, thereby obtaining a concentrated mixed solvent dispersion of the first surface-treated spherical silica particles; then adding a silazane compound represented by the formula (III):

   R²₃SiNHSiR²₃ (III)

   wherein R² is as defined above, a monofunctional silane compound represented by the formula (IV):

   R²₃SiX (IV)

   wherein R² is as defined above and X is an OH group or a hydrolyzable group, or a mixture thereof to the concentrated mixed solvent dispersion of the first surface-treated spherical silica particles for conducting surface treatment of the first surface-treated spherical silica particles so that R²₃SiO_{1/2} units (wherein R² is as defined above) are introduced on the surfaces of the first surface-treated spherical silica particles, thereby obtaining surface-treated spherical silica particles as second surface-treated spherical silica particles.
3. A secondary battery separator containing a substrate and a coating of the secondary battery separator coating composition according to claim 1 which is formed on a surface of the substrate or inside pores of the substrate, wherein an amount of the surface-treated spherical silica particles per 1 cm² of the substrate is 0.07 to 0.29 mg.
4. The secondary battery separator according to claim 3, wherein the substrate is a non-woven fabric.
5. A secondary battery including the secondary battery separator according to item 3 or 4.

### ADVANTAGEOUS EFFECTS OF INVENTION

According to the present invention, a coating composition containing particular surface-treated spherical silica particles can improve, when it is applied to a secondary battery separator, battery characteristics in long-term charge/discharge cycles, also can prevent fire spreading in the separator in case of firing, and can electrically separate an anode and a cathode to maintain insulation even after combustion, whereby a highly reliable secondary battery can be provided.

### DESCRIPTION OF EMBODIMENTS

The present invention will be described below in detail.

A secondary battery separator coating composition according to the present invention contains surface-treated spherical silica particles having R¹SiO_{3/2} units and R²₃SiO_{1/2} units on surfaces thereof, a specific median diameter in the volume-based particle size distribution, and a specific circularity.

### [Surface-Treated Spherical Silica Particles]

Surface-treated spherical silica particles used in the present invention have good dispersibility and can thus be uniformly applied to the separator substrate. The invasion of the surface-treated spherical silica particles used in the present invention into the pores of the separator substrate can prevent or reduce a significant increase in separator film thickness caused by deposition of the particles aggregating on the application surface. It is very important to prevent an increase in separator thickness from the viewpoint of internal electrical resistance issues and requirements of devices where the separator is used.

### [1] Surface Treating Agent

R¹SiO_{3/2} units and R²₃SiO_{1/2} units on the surfaces of the silica particles can be formed by bonding, to the silica surface, a trifunctional silane compound represented by the formula (II), a partial hydrolyzate thereof, or a mixture thereof, a silazane compound represented by the formula (III), and a monofunctional silane compound represented by the formula (IV), a hydrolysis product thereof, a condensation product thereof, or a mixture thereof.

R¹Si(OR⁴)₃ (II)

R²₃SiNHSiR²₃ (III)

R²₃SiX (IV)

The above R¹ is a substituted or unsubstituted monovalent hydrocarbon group having 1 to 20 carbon atoms, preferably 1 to 6 carbon atoms, more preferably 1 to 3 carbon atoms, still more preferably 1 or 2 carbon atoms.

Specific examples of the monovalent hydrocarbon group represented by R¹ include alkyl groups such as methyl, ethyl, n-propyl, isopropyl, n-butyl, and n-hexyl groups. Of these groups, methyl, ethyl, n-propyl, and isopropyl groups are preferred, and a methyl group and an ethyl group are particularly preferred. Some or all of hydrogen atoms in these monovalent hydrocarbon groups may be substituted by halogen atoms such as fluorine atoms, chlorine atoms, and bromine atoms, preferably fluorine atoms.

The above R² which may be the same or different is a substituted or unsubstituted monovalent hydrocarbon group having 1 to 6 carbon atoms, preferably 1 to 4 carbon atoms, more preferably 1 or 2 carbon atoms.

Specific examples of the monovalent hydrocarbon groups represented by R² include alkyl groups such as methyl, ethyl, n-propyl, isopropyl, and n-butyl groups. Of these groups, methyl, ethyl, and propyl groups are preferred, and a methyl group and an ethyl group are particularly preferred. Some or all of hydrogen atoms in these monovalent hydrocarbon groups may be substituted by halogen atoms such as fluorine atoms, chlorine atoms, and bromine atoms, preferably fluorine atoms.

In the formula (II), R⁴ which may be the same or different is a monovalent hydrocarbon group having 1 to 6 carbon atoms, preferably 1 to 3 carbon atoms, more preferably 1 or 2 carbon atoms.

Specific examples of the monovalent hydrocarbon groups represented by R⁴ include alkyl groups such as methyl, ethyl, n-propyl, and n-butyl groups. Of these groups, methyl, ethyl, and propyl groups are preferred, and a methyl group and an ethyl group are particularly preferred.

In the formula (IV), X is an OH group or a hydrolyzable group.

Specific examples of the hydrolyzable group X include halogen atoms such as a chlorine atom and a bromine atom; alkoxy groups such as methoxy and ethoxy groups; amino groups such as dimethylamino and diethylamino groups; and acyloxy groups such as an acetoxy group. Of these groups, alkoxy groups and amino groups are preferred, and a methoxy group and an ethoxy group are particularly preferred.

Examples of the trifunctional silane compound represented by the formula (II) include trialkoxysilanes such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, n-butyltrimethoxysilane, n-butyltriethoxysilane, n-hexyltrimethoxysilane, trifluoropropyltrimethoxysilane, and heptadecafluorodecyltrimethoxysilane. These trifunctional silane compounds can be used singly or in combination of two or more. Of these, methyltrimethoxysilane, methyltriethoxysilane, ethyltrimethoxysilane, and ethyltriethoxysilane are preferred, and methyltrimethoxysilane, methyltriethoxysilane, or partial hydrolyzate (partial hydrolytic condensate) thereof are more preferred.

Examples of the silazane compound represented by the formula (III) include hexamethyldisilazane and hexaethyldisilazane. These silazane compounds can be used singly or in combination of two or more. Of these, hexamethyldisilazane is preferred.

Examples of the monofunctional silane compound represented by the formula (IV) include monosilanol compounds such as trimethylsilanol and triethylsilanol; monochlorosilanes such as trimethylchlorosilane and triethylchlorosilane; monoalkoxysilanes such as trimethylmethoxysilane and trimethylethoxysilane; monoaminosilanes such as trimethylsilyldimethylamine and trimethylsilyldiethylamine; and monoacyloxysilanes such as trimethylacetoxysilane. These monofunctional silane compounds can be used singly or in combination of two or more. Of these, trimethylsilanol, trimethylmethoxysilane, and trimethylsilyldiethylamine are preferred, and trimethylsilanol and trimethylmethoxysilane are particularly preferred.

### [2] Silica Particles

Synthetic silica particles are roughly classified, according to the manufacturing method, into combustion method silica, vaporized metal combustion method silica, wet method silica, and sol-gel method silica (so-called Stoeber method). In particular, silica produced by the sol-gel method is suitable as the secondary battery separator coating composition of the present invention because the silica shows good monodispersibility and has a spherical shape, and the particle size of the silica can be controlled in a wide range, and furthermore, the silica, when immersed in an electrolyte, does not inhibit ion movement because of the porosity inside the silica core.

### [3] Method for Manufacturing Surface-Treated Silica Particles

An example of suitable methods for manufacturing surface-treated spherical silica particles by the sol-gel method will be describe below.

Surface-treated spherical silica particles used in the present invention can be produced by, for example, a manufacturing method including:
Step (A1): a step of synthesizing hydrophilic silica particles;
Step (A2): a step of surface treating with a trifunctional silane compound;
Step (A3): a step of concentrating; and
Step (A4): a step of surface treating with a monofunctional silane compound.

More specifically, a method for manufacturing surface-treated spherical silica particles used in the present invention includes:
Step (A1): a step of subjecting a tetrafunctional silane compound represented by the formula (I)

   Si(OR³)₄ (I)

   (wherein R³ which may be the same or different is a monovalent hydrocarbon group having 1 to 6 carbon atoms), a partial hydrolyzate thereof, or a mixture thereof to hydrolysis and condensation in the presence of a basic substance in a mixture of a hydrophilic organic solvent and water to form a mixed solvent dispersion of hydrophilic silica particles containing SiO₂ units,
Step (A2): a step of adding a trifunctional silane compound represented by the formula (II)

   R¹Si(OR⁴)₃ (II)

   (wherein R¹ and R⁴ are as defined above)
   a partial hydrolyzate thereof, or a mixture thereof to the mixed solvent dispersion of the hydrophilic silica particles for conducting surface treatment of the hydrophilic silica particles so that R¹SiO_{3/2} units (wherein R¹ is as defined above) are introduced on the surfaces of the hydrophilic silica particles, thereby obtaining a mixed solvent dispersion of first surface-treated silica particles,
Step (A3): a step of removing a portion of the hydrophilic organic solvent and water from the mixed solvent dispersion of the first surface-treated silica particles to concentrate the mixed solvent dispersion, thereby obtaining a concentrated mixed solvent dispersion of the first surface-treated silica particles,
Step (A4): a step of adding a silazane compound represented by the formula (III), a monofunctional silane compound represented by the formula (IV), or a mixture thereof:

   R²₃SiNHSiR²₃ (III)

   R²₃SiX (IV)

   (wherein R² and X are as defined above),
   to the concentrated mixed solvent dispersion of the first surface-treated silica particles for further conducting surface treatment of the first surface-treated silica particles so that R²₃SiO_{1/2} units (wherein R² is as defined above) are introduced on the surfaces of the first surface-treated silica particles, thereby obtaining second surface-treated silica particles.
Steps (A1) to (A4) will be described below in order.

### [3-1] Step (A1): Step of Synthesizing Hydrophilic Silica Particles

This step involves subjecting a tetrafunctional silane compound represented by the formula (I):

Si(OR³)₄ (I)

a partial hydrolyzate (partial hydrolytic condensate) thereof, or a mixture thereof to hydrolysis and condensation in the presence of a basic substance in a mixture of a hydrophilic organic solvent and water to form a mixed solvent dispersion of hydrophilic silica particles.

In the formula (I), R³ which may be the same or different is a monovalent hydrocarbon group having 1 to 6 carbon atoms, preferably 1 to 4 carbon atoms, more preferably 1 or 2 carbon atoms.

Specific examples of the monovalent hydrocarbon groups represented by R³ include alkyl groups such as methyl, ethyl, n-propyl, and n-butyl groups; and aryl groups such as a phenyl group. Of these groups, methyl, ethyl, n-propyl, and n-butyl groups are preferred, and a methyl group and an ethyl group are more preferred.

Examples of the tetrafunctional silane compound represented by the formula (I) include tetraalkoxysilanes such as tetramethoxysilane, tetraethoxysilane, tetra-n-propoxysilane, and tetra-n-butoxysilane; and tetraaryloxysilanes such as tetraphenoxysilane. These tetrafunctional silane compounds can be used singly or in combination of two or more. Of these, tetramethoxysilane, tetraethoxysilane, tetra-n-propoxysilane, and tetra-n-butoxysilane are preferred, and tetramethoxysilane and tetraethoxysilane are more preferred.

Examples of the partial hydrolytic condensate of the tetrafunctional silane compound represented by the formula (I) include methyl silicate and ethyl silicate.

The hydrophilic organic solvent is not limited as long as the tetrafunctional silane compound represented by the formula (I), a partial hydrolytic condensate thereof, and water are dissolved in the hydrophilic organic solvent. Examples of the hydrophilic organic solvent include alcohols; cellosolves such as methyl cellosolve, ethyl cellosolve, butyl cellosolve, and cellosolve acetate; ketones such as acetone and methyl ethyl ketone; and ethers such as dioxane and tetrahydrofuran. These hydrophilic organic solvents can be used singly or in combination of two or more. Of these, alcohols and cellosolves are preferred, and alcohols are more preferred.

Examples of the alcohols include alcohols represented by the formula (V).

R⁵OH (V)

In the formula (V), R⁵ is a monovalent hydrocarbon group having 1 to 6 carbon atoms, preferably 1 to 4 carbon atoms, more preferably 1 or 2 carbon atoms.

Specific examples of the monovalent hydrocarbon group represented by R⁵ include alkyl groups such as methyl, ethyl, n-propyl, isopropyl, and n-butyl groups. Of these groups, methyl, ethyl, n-propyl, and isopropyl groups are preferred, and a methyl group and an ethyl group are more preferred.

Examples of the alcohols represented by the formula (V) include methanol, ethanol, propanol, isopropanol, and butanol. Of these alcohols, methanol and ethanol are preferred.

As the number of carbon atoms in alcohol increases, the particle size of the generated silica particles tends to increase. Therefore, methanol is preferred in order to obtain desired silica particles with small particle sizes.

Examples of the basic substance include ammonia, dimethylamine, and diethylamine. Of these basic substances, ammonia and diethylamine are preferred, and ammonia is more preferred. A predetermined amount of the basic substance is dissolved in water, and the resulting (basic) aqueous solution is then mixed with the hydrophilic organic solvent described above.

The amount of water used at this time is preferably 0.5 to 5 moles, more preferably 0.6 to 2 moles, still more preferably 0.7 to 1 mole per mole of total hydrocarbyloxy groups in the tetrafunctional silane compound represented by the formula (I), a partial hydrolytic condensate thereof, or a mixture thereof.

The molar ratio of the hydrophilic organic solvent to water is preferably 0.5 to 10, more preferably 3 to 9, still more preferably 5 to 8 in terms of weight ratio. As the amount of the hydrophilic organic solvent increases, the silica particles tend to have small particle sizes as desired.

The amount of the basic substance is preferably 0.01 to 2 moles, more preferably 0.02 to 0.5 mole, still more preferably 0.04 to 0.12 mole per mole of total hydrocarbyloxy groups in the tetrafunctional silane compound represented by the formula (I), the partial hydrolytic condensate thereof, or the mixture thereof. As the amount of the basic substance becomes smaller, the silica particles tend to have a small particle size as desired.

The hydrolysis and condensation of the tetrafunctional silane compound represented by the formula (I) are carried out by a well-known technique, specifically, by adding the tetrafunctional silane compound represented by the formula (I) or the like to a hydrophilic organic solvent-water mixture containing a basic substance. The hydrolysis and condensation can be carried under well-known reaction conditions, typically preferably at about 10 to 80°C for about 1 to 20 hours.

The amount of the silica particles in the mixed solvent dispersion of the hydrophilic silica particles obtained in the step (A1) is typically 3 to 15% by weight, preferably 5 to 10% by weight.

### [3-2] Step (A2): Step of Surface Treating with Trifunctional Silane Compound

This step involves adding the trifunctional silane compound represented by the formula (II),

R¹Si(OR⁴)₃ (II)

a partial hydrolyzate thereof, or a mixture thereof to the mixed solvent dispersion of the hydrophilic silica particles obtained in the step (A1) for conducting surface treatment of the hydrophilic silica particles so that R¹SiO_{3/2} units (wherein R¹ is as defined above) are introduced on the surfaces of the hydrophilic silica particles, thereby obtaining a mixed solvent dispersion of first surface-treated silica particles.

The step (A2) is essential to prevent or reduce aggregation of the silica particles in the next concentration step (A3). If aggregation is not prevented or reduced, the resulting individual silica particles fail to maintain their primary particle size. As a result, aggregation or uneven distribution of the silica particles may occur when the silica particles are applied onto the separator.

Specific examples and the like of R¹ and R⁴ in the formula (II) and the trifunctional silane compound represented by the formula (II) are the same as those described for the surface treating agent of the silica fine particles.

The amount of the trifunctional silane compound represented by the formula (II) added is preferably 0.001 to 1 mole, more preferably 0.01 to 0.1 mole, still more preferably 0.01 to 0.05 mole per mole of Si atoms of the hydrophilic silica particles. When the above amount is 0.001 mole or more, good dispersibility is obtained. When the above amount is 1 mole or less, the silica particles do not aggregate. The reaction conditions are preferably about 10 to 80°C for about 1 to 20 hours.

The amount of the silica particles in the mixed solvent dispersion of the first surface-treated silica particles obtained in the step (A2) is typically 3% by weight or more and less than 15% by weight, preferably 5 to 10% by weight. When the amount of the silica particles is 3% by weight or more, high productivity is obtained. When the amount of the silica particles is less than 15% by weight, the silica particles do not aggregate.

### [3-3] Step (A3) Step of Concentrating

This step involves removing a portion of the hydrophilic organic solvent and water from the mixed solvent dispersion of the first surface-treated silica particles obtained in the step (A2) to concentrate the mixed solvent dispersion, thereby obtaining a desired concentrated mixed solvent dispersion of the first surface-treated silica particles. A hydrophobic organic solvent may be added in advance or during this step.

The hydrophobic solvent is preferably, for example, a hydrocarbon solvent or a ketone solvent. Specific examples include toluene and xylene; methyl ethyl ketone, and methyl isobutyl ketone. These solvents can be used singly or in combination of two or more. Of these, methyl isobutyl ketone is preferred. Suitable method for removing a portion of the hydrophilic organic solvent and water include, for example, distillation or vacuum distillation. The conditions in this process are preferably about 10 to 150°C for 1 to 20 hours.

The amount of the silica particles in the obtained concentrated dispersion is preferably 15 to 40% by weight, more preferably 20 to 35% by weight, still more preferably 25 to 30% by weight. When the amount of the silica particles is 15% by weight or more, the surface treatment proceeds well in the subsequent step. When the amount of the silica particles is 40% by weight or less, the silica particles do not aggregate.

The step (A3) is essential to prevent or reduce a defect generated by the reaction of alcohol and water with the silazane compound represented by the formula (III) and the monofunctional silane compound represented by the formula (IV) served as surface treating agents in the next step (A4) to cause an inadequate surface treatment so that aggregation occurs in subsequent drying and the obtained silica particles fail to maintain their primary particle size.

### [3-4] Step (A4): Step of Surface Treating with Monofunctional Silane Compound

This step involves adding the silazane compound represented by the formula (III), the monofunctional silane compound represented by the formula (IV), or a mixture thereof to the concentrated mixed solvent dispersion of the first surface-treated silica particles obtained in the step (A3) for further conducting surface treatment of the first surface-treated silica particles so that R²₃SiO_{1/2} units (wherein R² is as defined above) are introduced on the surfaces of the first surface-treated silica particles, thereby obtaining second surface-treated silica particles.

R²₃SiNHSiR²₃ (III)

R²₃SiX (IV)

In this step, the silanol groups remaining on the surfaces of the first surface-treated silica particles are triorganosilylated by the treatment described above to introduce the R²₃SiO_{1/2} units on the surfaces thereof.

Specific examples and the like of R² and X in the above formulas, the silazane compound represented by the formula (III), and the monofunctional silane compound represented by the formula (IV) are the same as those described for the surface treating agent of the silica fine particles.

The amount of the silazane compound and the monofunctional silane compound used is preferably 0.1 to 0.5 mole, more preferably 0.2 to 0.4 mole, particularly preferably 0.25 to 0.35 mole per mole of Si atoms of the hydrophilic silica particles. When the above amount is 0.1 mole or more, good dispersibility is obtained. When the above amount is 0.5 mole or less, it is economically advantageous. The reaction conditions are preferably about 10 to 150°C for about 1 to 20 hours.

The obtained surface-treated spherical silica particles can be used for a secondary battery separator coating composition as they are. Preferably, a dispersion prepared by mixing appropriate amounts of the surface-treated spherical silica particles and a solvent is used. Since the surface-treated spherical silica particles show good dispersibility and maintain a highly dispersed state even when being mixed with a solvent, the surface-treated spherical silica particles can thus be easily and uniformly applied to the separator substrate.

The surface-treated spherical silica particles are preferably dehydrated in advance before the mixing step, and the dehydration is preferably performed by heating the surface-treated spherical silica particles. Specifically, the dehydration step of drying the surface-treated spherical silica particles at a temperature of 160 to 260°C under normal pressure or reduced pressure for 12 hours or longer is preferably provided.

The surface-treated spherical silica particles used in the present invention have a median diameter (50% cumulative diameter) of 0.01 to 0.5 µm, preferably 0.01 to 0.4 µm, more preferably 0.01 to 0.35 µm in the volume-based particle size distribution. The median diameter in the volume-based particle size distribution is measured as described below.

The surface-treated silica particles used in the present invention have a spherical shape. In the present invention, the spherical shape refers to a circularity of 0.8 to 1.0. The circularity is preferably 0.8 to 0.95. The circularity is measured as described below.

### [Secondary Battery Separator Coating Composition]

### [1] Surface-Treated Spherical Silica Particles

The secondary battery separator coating composition of the present invention contains the surface-treated spherical silica particles described above. The amount of the surface-treated spherical silica particles is preferably 1 to 50% by weight, more preferably 2 to 40% by weight relative to the total amount of the coating composition.

### [2] Solvent

The secondary battery separator coating composition of the present invention preferably contains a solvent in order to disperse the surface-treated spherical silica particles in the coating composition.

Examples of the solvent include alcohols, esters, carbonates, ketones, lactones, ethers, sulfoxides, and amides.

Examples of alcohols include methanol, ethanol, and isopropanol. Examples of esters include ethyl acetate, methyl propionate, and butyl acetate. Examples of carbonates include propylene carbonate, ethylene carbonate, butylene carbonate, dimethyl carbonate, methyl ethyl carbonate, and diethyl carbonate. Examples of ketones include methyl ethyl ketone, methyl isobutyl ketone, methyl propyl ketone, and diethyl ketone. Examples of lactones include γ-butyrolactone. Examples of ethers include trimethoxymethane, 1,2-dimethoxyethane, diethyl ether, 2-ethoxyethane, tetrahydrofuran, and 2-methyltetrahydrofuran. Examples of sulfoxides include dimethyl sulfoxide. Examples of amides include N-methyl-2-pyrrolidone (NMP), N, N-dimethylformamide, and N, N-dimethylacetamide. These solvents can be used singly or in combination of two or more. Of these, amides such as N-methyl-2-pyrrolidone (NMP), N, N-dimethylformamide, N, N-dimethylacetamide are preferred.

When the solvent is used, the amount thereof is preferably 10 to 80% by weight, more preferably 20 to 70% by weight relative to the total amount of the coating composition.

### [3] Binder

The secondary battery separator coating composition of the present invention may contain a binder in order to bind the surface-treated spherical silica particles to the separator substrate.

Examples of the binder include, but are not limited to, vinylidene fluoride copolymer resins such as a copolymer of vinylidene fluoride (VDF) and hexafluoropropylene (HFP), a copolymer of vinylidene fluoride (VDF), tetrafluoroethylene (TFE), and hexafluoropropylene (HFP), a copolymer of vinylidene fluoride (VDF), hexafluoropropylene (HFP), perfluoromethyl vinyl ether (PFMV), and tetrafluoroethylene (TFE); fluororesins such as polytetrafluoroethylene (PTFE); fluororubber; styrene-butadiene rubber (SBR) and ethylene-propylene rubber (EPDM); polymers such as styrene-acrylonitrile copolymer; polysaccharides such as carboxymethyl cellulose (CMC); polyimide resin; and silicone resin. These binders can be used singly or in combination of two or more. Of these, vinylidene fluoride copolymer resins are preferred.

When the binder is used, the amount thereof is preferably 1 to 20% by weight, more preferably 2 to 10% by weight.

### [4] Method for Manufacturing Coating Composition

The secondary battery separator coating composition of the present invention may be produced by mixing the surface-treated silica particles which are manufactured by the method including the steps (A1) to (A4) or other methods, with a solvent, a binder, and other components by an ordinary method, and subjecting the resulting mixture to deformation or other treatments, as needed.

### [Separator]

The secondary battery separator coating composition of the present invention may be applied to the separator substrate by any method. Non-limited examples of the method include a bar coater method, a spin coating method, a dip coating method, an offset printing method, and a screen printing method.

The secondary battery separator coating composition of the present invention is applied to one side or both sides of the separator substrate, or the separator substrate is impregnated with the secondary battery separator coating composition of the present invention, and an excess solvent is then removed by drying to form a coating of the coating composition on the surface of the substrate and inside the pores when the substrate has the pores. This process can provide a separator having the surface-treated spherical silica particles bonded to the surface of the separator substrate or the inside of the pores.

The substrate of the separator may be made of any material as long as it is commonly used in secondary batteries. The substrate is preferably made of a non-woven fabric. Examples of the non-woven fabric include non-woven fabrics having fiber diameters of 0.1 to 5 µm (e.g., 0.1 µm, 1 µm, 5 µm, etc.). The non-woven fabrics vary depending on the production methods, but any type can be used in the present invention.

Examples of the fiber include cellulose fibers, pulp fibers, carbon fibers, glass fibers, ceramic fibers, aramid fibers, vinylon fibers, and polyamide fibers. From the viewpoint of combustion resistance, aramid fibers are preferred due to its high fire spread prevention effect.

The thickness of the substrate is preferably 30 µm or less, more preferably 20 µm or less. The lower limit is not limited, preferably 1 µm or more.

The non-woven fabric is preferably dehydrated in advance before the secondary battery separator coating composition of the present invention is applied thereto. Specifically, the dehydration step of drying the non-woven fabric at a temperature of 130 to 260°C, especially 140 to 200°C, under normal pressure or reduced pressure for 12 hours or longer is preferably employed.

The amount of the surface-treated spherical silica particles applied to the separator substrate is 0.07 to 0.29 mg/cm², preferably 0.11 to 0.29 mg/cm². If the amount of the surface-treated spherical silica particles is less than 0.07 mg/cm², the obtained secondary battery separator has poor battery characteristics in long-term charge/discharge cycles and low flame retardancy. If the amount of the surface-treated spherical silica particles is more than 0.29 mg/cm², the separator has large film thickness and large internal electrical resistance.

The thickness of the obtained separator is preferably 30 µm or less, more preferably 25 µm or less, still more preferably 24 µm or less. The lower limit is not limited, preferably 1 µm or more.

### [Secondary Battery]

A secondary battery where a separator having the coating composition of the present invention applied thereon is used is not limited, but preferably includes: electrodes composed of a positive electrode and a negative electrode; a separator interposed between the electrodes; and a non-aqueous electrolyte. The secondary battery is preferably a lithium-ion secondary battery.

### [1] Positive Electrode

The positive electrode material comprises a positive electrode active material, conductive agent, binding agent, viscosity modifier, and the like. The positive electrode active material may be lithium or a lithium-containing compound. The positive electrode active material can be used singly or in combination of two or more.

Specific examples of the lithium-containing compound include lithium complex oxides which contain lithium. For increasing the energy density, lithium complex oxides based on LiₚMetO₂ are preferred wherein Met is preferably at least one element of cobalt, nickel, iron, and manganese and p usually has a value in the range of 0.05 ≤ p ≤ 1.10. Specific examples of the lithium complex oxides include LiCoO₂, LiNiO₂, LiFeO₂, and Li_{q}NiᵣCo₁₋ᵣO₂ (wherein q and r have values varying with the charged/discharged state of the battery and usually in the range of 0 < q < 1 and 0.7 < r ≤ 1) having a layer structure; LiNi_{0.8}Co_{0.1}Mn_{0.1}O₂; LiMn₂O₄ having a spinel structure; and rhombic LiMnO₂. Also used is a substitutional spinel type manganese compound adapted for high voltage operation which is LiMetₛMn₁₋ₛO₄ wherein Met is titanium, chromium, iron, cobalt, nickel, copper, zinc or the like and s has a value in the range of 0 < s < 1.

It is noted that the lithium complex oxide described above is prepared, for example, by grinding and mixing a carbonate, nitrate, oxide or hydroxide of lithium and a carbonate, nitrate, oxide or hydroxide of a transition metal in accordance with the desired composition, and firing at a temperature in the range of 600 to 1,000°C in an oxygen atmosphere.

### [2] Negative Electrode

The negative electrode material comprises a negative electrode active material, conductive agent, binding agent, viscosity modifier, and the like. The negative electrode active material may be used singly or in an appropriately selected combination of two or more.

Specific examples of the negative electrode active material include carbon materials such as non-graphitizable carbon, graphitizable carbon, graphite, pyrolytic carbons, coke, glassy carbon, fired organic polymers, carbon fibers, and active carbon. Also included are materials capable of occluding and releasing lithium ions and containing at least one element selected from metal elements and semi-metal elements.

Examples of the conductive agent include metal powders and metal fibers such as Al, Ti, Fe, Ni, Cu, Zn, Ag, Sn, and Si, or other elements; and various types of graphite such as natural graphite, synthetic graphite, various coke powders, meso-phase carbon, vapo-grown carbon fibers, pitch-based carbon fibers, PAN-based carbon fibers, and various fired resins. These conductive agents may be used singly or in an appropriately selected combination of two or more.

Examples of the binding agent include polyimide resins, polyamide resins, polyamide-imide resins, polyvinylidene fluoride (PVDF) resin, and styrene-butadiene rubber (SBR). These binding agents may be used singly or in an appropriately selected combination of two or more.

Examples of the viscosity modifier include carboxymethyl cellulose, sodium polyacrylate, other acrylic polymers, and fatty acid esters. These viscosity modifiers may be used singly or in an appropriately selected combination of two or more.

With regard to the amount (% by weight of solids) of each component in the positive electrode material, the positive electrode material preferably contains 90 to 98% by weight of the positive electrode active material, 0.5 to 5.0% by weight of the conductive agent, 0.5 to 5.0% by weight of the binding agent, and 0 to 3.0% by weight of the viscosity modifier.

With regard to the amount (% by weight of solids) of each component in the negative electrode material, the negative electrode material preferably contains 75 to 98% by weight of the negative electrode active material, 1 to 20% by weight of the conductive agent, 1 to 20% by weight of the binding agent, and 0% by weight to 3.0% by weight of the viscosity modifier.

### [3] Non-Aqueous Electrolyte

Examples of the non-aqueous electrolyte include light metal salts. Examples of the light metal salts include alkali metal salts such as lithium salts, sodium salts, and potassium salts; alkaline earth metal salts such as magnesium salts and calcium salts; aluminum salts. One or more light metal salts are selected depending on a particular purpose.

For example, specific examples of lithium salts include LiBF₄, LiClO₄, LiPF₆, LiAsF₆, CF₃SO₃Li, (CF₃SO₂)₂NLi, C₄F₉SO₃Li, CF₃CO₂Li, (CF₃CO₂)₂NLi, C₆F₅SO₃Li, C₈F₁₇SO₃Li, (C₂F₅SO₂)₂NLi, (C₄F₉SO₂)(CF₃SO₂)NLi, (FSO₂C₆F₄)(CF₃SO₂)NLi, ((CF₃)₂CHOSO₂)₂NLi, (CF₃SO₂)₃CLi, (3,5-(CF₃)₂C₆F₃)₄BLi, LiCF₃, LiAlCl₄, and C₄BO₈Li. These lithium salts can be used singly or as a mixture of two or more.

When a non-aqueous electrolyte containing a lithium salt is used, the electrolyte may contain any non-aqueous solvent as long as it can serve for a non-aqueous electrolyte. Typical examples of the non-aqueous solvent include aprotic high-dielectric-constant solvents such as ethylene carbonate, propylene carbonate, butylene carbonate, and γ-butyrolactone; and aprotic low-viscosity solvents such as dimethyl carbonate, ethyl methyl carbonate, diethyl carbonate, methyl propyl carbonate, dipropyl carbonate, diethyl ether, tetrahydrofuran, 1, 2-dimethoxyethane, 1, 2-diethoxyethane, 1, 3-dioxolan, sulfolane, methylsulfolane, acetonitrile, propionitrile, anisole, acetate esters such as methyl acetate, and propionate esters. These aprotic high-dielectric-constant solvents and aprotic low-viscosity solvents are preferably used in combination at a suitable ratio.

In addition, ionic liquids containing imidazolium, ammonium, and pyridinium cations can be used. The counter anions are not particularly limited and include BF₄⁻, PF₆⁻, and (CF₃SO₂)₂N⁻. The ionic liquid can be used as a mixture with the non-aqueous electrolyte solvent described above.

When a solid electrolyte or gel electrolyte is used, a glass-based inorganic solid electrolyte, polyether gel, silicone gel, silicone polyether gel, acrylic gel, silicone acrylic gel, acrylonitrile gel, poly(vinylidene fluoride), or the like can be contained as a polymer component. These electrolytes may be polymerized in advance or after liquid injection. These electrolytes can be used singly or as a mixture of two or more.

The non-aqueous electrolyte may further contain various additives as needed. Examples of additives include additives for the purpose of improving cycle life such as vinylene carbonate, methyl vinylene carbonate, ethyl vinylene carbonate, and 4-vinylethylene carbonate; additives for the purpose of preventing over-charging such as biphenyl, alkylbiphenyl, cyclohexylbenzene, t-butylbenzene, diphenyl ether, and benzofuran; additives for the purpose of deoxidation and dehydration such as various carbonate compounds such as carbon dioxide gas, various carboxylic acid anhydrides, and various nitrogen- and sulfur-containing compounds. The foregoing compounds which are partially fluorinated are also useful.

Usually, the nonaqueous electrolyte secondary battery further comprises a casing for receiving the foregoing components in a tight seal manner. The battery may take any desired shape without particular limits. In general, the battery is of the coin type wherein electrodes and a separator, all punched into coin shape, are stacked, or of the rectangular or cylinder type wherein electrode sheets and a separator are spirally wound.

### EXAMPLES

Synthesis Examples, Examples, and Comparative Examples are given below for further illustrating the invention, but they are not to be construed as limiting the invention thereto.

### [1] Synthesis and Evaluation of Surface-Treated Silica Particles

### [Synthesis Example 1]

### • Step (S 1): Step of Synthesizing Hydrophilic Silica Particles

A 3-liter glass reactor equipped with a stirrer, a dropping funnel, and a thermometer was charged with 989.5 g of methanol, 135.5 g of water, and 66.5 g of 28 wt% aqueous ammonia, which were then mixed. This solution was controlled at 35°C, and 436.5 g (2.87 moles) of tetramethoxysilane was added dropwise with stirring over 6 hours. After the completion of dropwise addition, stirring was continued for another 0.5 hours to conduct hydrolysis, yielding a suspension of hydrophilic silica particles.

### • Step (S2): Step of Surface Treating with Trifunctional Silane Compound

To the suspension obtained in the step (S1), 4.4 g (0.03 mole) of methyltrimethoxysilane was added dropwise at 25°C over 0.5 hours. After dropwise addition, stirring was continued for 12 hours to treat the surfaces of the silica particles, yielding a dispersion of first surface-treated silica particles.

### • Step (S3): Step of Concentrating

Next, the glass reactor was equipped with an ester adaptor and a condenser tube. The dispersion obtained in the previous step was heated to 60 to 70°C to distill off 1,021 g of a mixture of methanol and water, yielding a concentrated mixed solvent dispersion of the first surface-treated silica particles. The amount of the silica particles in the concentrated dispersion was 28% by weight.

### • Step (S4): Step of Surface Treating with Monofunctional Silane Compound

To the concentrated dispersion obtained in the previous step, 138.4 g (0.86 mole) of hexamethyldisilazane was added at 25°C. The dispersion was then heated to 50 to 60°C and allowed to react for 9 hours to cause trimethylsilylation of the silica particles in the dispersion. Next, the solvents in the dispersion were distilled off at 130°C under reduced pressure (6,650 Pa), yielding 186 g of second surface-treated silica particles [1].

### [Synthesis Example 2]

The procedure of Synthesis Example 1 was repeated in the same manner except that the amounts of methanol, water, and 28 wt% aqueous ammonia in the step (S1) were changed to 1045.7 g of methanol, 112.6 g of water, and 33.2 g of 28 wt% aqueous ammonia. There was obtained 188 g of surface-treated silica particles [2].

### [Synthesis Example 3]

### • Step (S1) : Step of Synthesizing Hydrophilic Silica Particles

A 3-liter glass reactor equipped with a stirrer, a dropping funnel, and a thermometer was charged with 623.7 g of methanol, 41.4 g of water, and 49.8 g of 28 wt% aqueous ammonia, which were then mixed. This solution was controlled at 35°C, and 1,163.7 g of tetramethoxysilane and 418.1 g of 5.4 wt% aqueous ammonia started being added at the same time with stirring. The former and the latter were added dropwise over 6 hours and 4 hours, respectively. After dropwise addition of tetramethoxysilane, stirring was continued for 0.5 hours to conduct hydrolysis, yielding a suspension of hydrophilic silica particles.

### • Step (S2): Step of Surface Treating with Trifunctional Silane Compound

To the suspension obtained in the step (S1), 11.6 g (equivalent to a molar ratio of methyltrimethoxysilane to tetramethoxysilane of 0.01) of methyltrimethoxysilane was added dropwise at 25°C over 0.5 hours. After dropwise addition, stirring was continued for 12 hours, yielding first surface-treated silica particles.

### • Step (S3): Step of Concentrating

Next, the glass reactor was equipped with an ester adaptor and a condenser tube, and 1,440 g of ethyl isobutyl ketone was added to the dispersion obtained in the previous step. The dispersion was then heated to 80 to 110°C to distill off a mixture of methanol and water over 7 hours, yielding a concentrated mixed solvent dispersion of the first surface-treated silica particles.

### • Step (S4): Step of Surface Treating with Monofunctional Silane Compound

To the concentrated dispersion obtained in the previous step, 357.6 g of hexamethyldisilazane was added at 25°C. The dispersion was heated to 120°C and allowed to react for 3 hours to cause trimethylsilylation of the silica particles. Subsequently, the solvents were distilled off under reduced pressure, yielding 472 g of second surface-treated silica particles [3].

### [Synthesis Example 4]

The procedure of Synthesis Example 3 was repeated in the same manner except that the temperature for hydrolysis of tetramethoxysilane was changed to 27°C in the step (S 1). There was obtained 469 g of surface-treated silica particles [4].

### [Synthesis Example 5]

The procedure of Synthesis Example 3 was repeated in the same manner except that the temperature for hydrolysis of tetramethoxysilane was changed to 20°C in the step (S 1). There was obtained 461 g of surface-treated silica particles [5].

### [Comparative Synthesis Example 1]

A 0.3-liter glass reactor equipped with a stirrer and a thermometer was charged with 100 g of VMC silica (trade name: SO-C1 available from Admatechs Co., Ltd.). One gram of pure water was added with stirring, and after sealing, stirring was continued at 60°C for another 10 hours. Next, the reactor was cooled to 25°C, and 2 g of hexamethyldisilazane was then added with stirring. After sealing, stirring was continued for another 24 hours. The reactor was heated to 120°C, and the residual starting materials and the generated ammonia were removed while nitrogen gas was introduced, yielding 100 g of surface-treated silica particles [6].

### [Comparative Synthesis Example 2]

A 0.3-liter glass reactor equipped with a stirrer and a thermometer was charged with 100 g of VMC silica (trade name: SO-C1 available from Admatechs Co., Ltd.). One gram of pure water was added with stirring, and after sealing, stirring was continued at 60°C for another 10 hours. Next, the reactor was cooled to 25°C, and 1 g of methyltrimethoxysilane was then added with stirring. After sealing, stirring was continued for another 24 hours. Next, 2 g of hexamethyldisilazane was added with stirring, and after sealing, stirring was continued for another 24 hours. The reactor was heated to 120°C, and the residual starting materials and the generated ammonia were removed while nitrogen gas was introduced, yielding 101 g of surface-treated silica particles [7].

### [Comparative Synthesis Example 3]

The procedure of Synthesis Example 1 was repeated in the same manner except that no hexamethyldisilazane was added and the solvents in the dispersion were distilled off at 130°C under reduced pressure (6,650 Pa) in the step (S4). There was obtained 179 g of surface-treated silica particles [8].

### [Comparative Synthesis Example 4]

A 0.3-liter glass reactor equipped with a stirrer and a thermometer was charged with 100 g of silica powder produced by a gas-phase method and having a BET specific surface area of 50 m²/g. One gram of pure water was added with stirring, and after sealing, stirring was continued at 60°C for another 10 hours. Next, the reactor was cooled to 25°C, and 2 g of hexamethyldisilazane was then added with stirring. After sealing, stirring was continued for another 24 hours. The reactor was heated to 120°C, and the residual starting materials and the generated ammonia were removed while nitrogen gas was introduced, yielding 100 g of surface-treated silica particles [9].

The surface-treated silica particles (surface-treated silica particles [1] to [9]) obtained in Synthesis Examples 1 to 5 and Comparative Synthesis Examples 1 to 4 were analyzed by the methods described below. The results are shown in Table 1.

### [Particle Size]

The surface-treated silica particles were added to methanol in such amount that 0.5% by weight of the particles were present in methanol and ultrasonicated for 10 minutes to disperse the particles. The volume-based particle size distribution was measured by a dynamic light scattering/laser Doppler method Nanotrac particle size distribution analyzer (trade name: UPA-EX150 available from Nikkiso Co., Ltd.), and the median diameter (50% cumulative diameter) in the particle size distribution was calculated.

### [Shape Observation]

The particles were observed for their shapes under an electron microscope (trade name: S-4700 model, magnification: × 10⁵, available from Hitachi, Ltd). The particles having a circularity in the range of 0.8 to 1 when projected into two dimensions were defined as being "spherical," and the particles were otherwise defined as being "irregular." The circularity as used herein refers to (the circumference of a perfect circle having an area equal to the area of a 2D-projected particle image)/(the circumference of the area of the 2D-projected particle image). The circularity of 100 primary particles was measured, and the average circularity was used.

**[Table 1]**

| | Synthesis Example 1 | Synthesis Example 2 | Synthesis Example 3 | Synthesis Example 4 | Synthesis Example 5 | Comparative Synthesis Example 1 | Comparative Synthesis Example 2 | Comparative Synthesis Example 3 | Comparative Synthesis Example 4 |
|---|---|---|---|---|---|---|---|---|---|
| Particle size (nm) | 52 | 11 | 115 | 240 | 302 | 300 | 300 | 5,340 | 340 |
| Shape | spherical | spherical | spherical | spherical | spherical | spherical | irregular | irregular | irregular |
| Circularity | 0.86 | 0.92 | 0.90 | 0.81 | 0.83 | 0.80 | 0.65 | - | - |

### [2] Manufacture of Secondary Battery Separator Coating Composition

### [Examples 1-1 to 1-5, Comparative Examples 1-1 to 1-4]

The surface-treated silica particles (2 wt%, 5 wt%, 10 wt%, 20 wt%, 30 wt%) obtained in Synthesis Examples 1 to 5 and Comparative Synthesis Examples 1 to 4, 5% by weight of VDF-HFP copolymer (KYNAR^{®} 2851 available from ARKEMA) served as a binder, and NMP served as a solvent were mixed, and the resulting mixture was then defoamed in a rotary deforming machine at 2,000 rpm for 5 minutes, obtaining secondary battery separator coating compositions.

### [3] Manufacture and Evaluation of Secondary Battery Separator

### [Examples 2-1 to 2-15, Comparative Examples 2-1 to 2-31]

The secondary battery separator coating compositions prepared above were applied to one side of a non-woven fabric having a size of 10 × 10 cm² (prepared by previously heating an aramid fiber non-woven fabric with a thickness of 15 µm at 150°C for 12 hours to remove water) in the application amounts shown in Tables 2 and 3, and the excess was wiped off with a squeegee. The resulting products were dried in an oven at 150°C for 12 hours, obtaining secondary battery separators. The amount of the surface-treated silica particles applied per 1 cm² was calculated from the weight amount of each separator before and after application and drying.

The thickness of the obtained secondary battery separators, the combustion test results, and the lithium-ion battery characteristics are shown in Tables 2 and 3. The results of a secondary battery separator having no coating composition applied on a non-woven fabric are shown in Comparative Example 2-31.

### [Thickness of Separator]

The thickness of the obtained secondary battery separators was measured with a thickness gauge. The secondary battery separators having a thickness of 24 µm or less were rated "○", the secondary battery separators having a thickness of more than 24 µm and 30 µm or less were rated "△", and the secondary battery separators having a thickness of more than 30 µm were rated "×".

### [Combustion Test]

The obtained secondary battery separators were cut into a size of 3.5 × 6.5 cm, and both ends of each secondary battery separator in the longitudinal direction (6.5-cm direction) were fixed with two stands such that the ends were parallel each other and the separator maintained its shape without loosening. The separators were ignited from the central bottom and left until the fire was extinguished, and the separators were then visually inspected. The separators that maintained their shape were rated "O", and the separators that did not maintain their shape and underwent separation were rated "×".

### [Battery Characteristic Test]

The battery characteristics of the lithium-ion secondary batteries manufactured by the following procedure were evaluated.

### (Positive Electrode Material)

A positive electrode active material LiNi_{0.8}Co_{0.1}Mn_{0.1}O₂ was laminated and bonded to a metal plate, and an extraction electrode (tab) was electrically welded to a metal portion having no positive electrode active material to form a positive electrode material. A polyimide tape was attached to the entire surface of the back side that did not come into close contact with the separator to ensure electrical insulation.

### (Negative Electrode Material)

Graphite served as a negative electrode active material was laminated and bonded to a metal plate, and an extraction electrode (tab) was electrically welded to a metal portion having no negative electrode active material applied thereon to form a negative electrode material. A polyimide tape was attached to the entire surface of the back side that did not come into close contact with the separator to ensure electrical insulation.

### (Lamination of Components of Lithium-Ion Battery)

A polyolefin film-laminated aluminum film was disposed with the polyolefin film on the top side, and a portion of the aluminum film that was not provided with a laminate where the negative electrode material, the secondary battery separator prepared above, and the positive electrode material were laminated in this order was bent to seal an outer case.

The separator was disposed such that the coating composition-applied surface faced the positive electrode.

### (Heat Fusion of End Faces of Aluminum Film)

The end faces of the aluminum film were pressed under heating at 180°C and sealed by press-bonding. At this time, only the end face from which no extraction electrode was extracted was not subjected to press-bonding but opened. The laminate thus obtained was dried at a temperature of 130°C under reduced pressure for 12 hours.

### (Inclusion of Electrolyte)

An electrolyte was injected into the dried laminate from the non-press-bonded end face in a glovebox filled with dry N₂. The electrolyte was 1 mol/L LiPF₆ in [ethylene carbonate: ethylene carbonate (1:1 vol%)] solution.

Subsequently, the open portion was subjected to press-bonding by using a vacuum heating laminator in the glovebox, obtaining a lithium-ion battery.

The lithium-ion battery obtained as described above was pre-charged/discharged (formation process). In a thermostatic bath at 30°C, the lithium-ion battery was then charged to 4.1 V at a current of 0.2 cA and then charged at a constant voltage of 4.1 V until the current reached 0.02 cA. After charging, the lithium-ion battery was discharged to 2.7 V at a current of 0.2 cA. This process was repeated. The battery capacity after 500 charge/discharge cycles was obtained provided that the initial capacity was 100%, and the retention rate of the battery capacity was calculated. The batteries showing a retention rate of 85% or more were rated "○", the batteries showing a retention rate of 80% or more were rated "△", and the batteries showing a retention rate of less than 80% were rated "×".

**[Table 2]**

| | Coating composition | Surface-treated silica particles | Amount of applied silica particles (mg/cm²) | Separator thickness (µm) | Combustion test | Battery characteristics 500 Cycles |
|---|---|---|---|---|---|---|
| Comparative Example 2-1 | Example 1-1 | Synthesis Example 1 | 0.03 | 16 ○ | × | 65% × |
| Example 2-1 | | | 0.07 | 16 ○ | ○ | 83% Δ |
| Example 2-2 | | | 0.14 | 18 ○ | ○ | 85% ○ |
| ^{.} Example 2-3 | | | 0.29 | 21 ○ | ○ | 86% ○ |
| Comparative Example 2-2 | | | 0.43 | 26 Δ | ○ | 79% × |
| Comparative Example 2-3 | Example 1-2 | Synthesis Example 2 | 0.03 | 16 ○ | × | 65% × |
| Example 2-4 | | | 0.07 | 16 ○ | ○ | 83% Δ |
| Example 2-5 | | | 0.14 | 17 ○ | ○ | 85% ○ |
| Example 2-6 | | | 0.29 | 19 ○ | ○ | 86% ○ |
| Comparative Example 2-4 | | | 0.43 | 26 Δ | ○ | 79% × |
| Comparative Example 2-5 | Example 1-3 | Synthesis Example 3 | 0.03 | 16 ○ | × | 65% × |
| Example 2-7 | | | 0.07 | 17 ○ | ○ | 83% Δ |
| Example 2-8 | | | 0.14 | 19 ○ | ○ | 85% ○ |
| Example 2-9 | | | 0.29 | 22 ○ | ○ | 86% ○ |
| Comparative Example 2-6 | | | 0.43 | 28 △ | ○ | 79% × |
| Comparative Example 2-7 | Example 1-4 | Synthesis Example 4 | 0.03 | 16 ○ | × | 65% × |
| Example 2-10 | | | 0.07 | 18 ○ | ○ | 83% Δ |
| Example 2-11 | | | 0.14 | 20 ○ | ○ | 85% ○ |
| Example 2-12 | | | 0.29 | 22 ○ | ○ | 86% ○ |
| Comparative Example 2-8 | | | 0.43 | 29 Δ | ○ | 79% × |
| Comparative Example 2-9 | Example 1-5 | Synthesis Example 5 | 0.03 | 16 ○ | × | 65% × |
| Example 2-13 | | | 0.07 | 18 ○ | ○ | 83% Δ |
| Example 2-14 | | | 0.14 | 20 ○ | ○ | 85% ○ |
| Example 2-15 | | | 0.29 | 23 ○ | ○ | 86% ○ |
| Comparative Example 2-10 | | | 0.43 | 29 Δ | ○ | 79% × |

**[Table 3]**

| | Coating composition | Surface-treated silica particles | Amount of applied silica particles (mg/cm²) | Separator thickness (µm) | Combustion test | Battery characteristics 500 Cycles |
|---|---|---|---|---|---|---|
| Comparative Example 2-11 | Comparative Example 1-1 | Comparative Synthesis Example 1 | 0.03 | 160 | × | 65% × |
| Comparative Example 2-12 | | | 0.07 | 22 ○ | ○ | 79% × |
| Comparative Example 2-13 | | | 0.14 | 25 Δ | ○ | 78% × |
| Comparative Example 2-14 | | | 0.29 | 29 Δ | ○ | 72% × |
| Comparative Example 2-15 | | | 0.43 | 42 × | ○ | 70% × |
| Comparative Example 2-16 | Comparative Example 1-2 | Comparative Synthesis Example 2 | 0.03 | 160 | × | 65% × |
| Comparative Example 2-17 | | | 0.07 | 25 Δ | ○ | 79% × |
| Comparative Example 2-18 | | | 0.14 | 29 Δ | ○ | 78% × |
| Comparative Example 2-19 | | | 0.29 | 33 × | ○ | 72% × |
| Comparative Example 2-20 | | | 0.43 | 42 × | ○ | 70% × |
| Comparative Example 2-21 | Comparative Example 1-3 | Comparative Synthesis Example 3 | 0.03 | 18 ○ | × | 65% × |
| Comparative Example 2-22 | | | 0.07 | 29 △ | ○ | 79% × |
| Comparative Example 2-23 | | | 0.14 | 35 × | ○ | 78% × |
| Comparative Example 2-24 | | | 0.29 | 44 × | ○ | 72% × |
| Comparative Example 2-25 | | | 0.43 | 52 × | ○ | 70% × |
| Comparative Example 2-26 | Comparative Example 1-4 | Comparative Synthesis Example 4 | 0.03 | 19 ○ | × | 65% × |
| Comparative Example 2-27 | | | 0.07 | 31 × | ○ | 79% × |
| Comparative Example 2-28 | | | 0.14 | 54 × | ○ | 78% × |
| Comparative Example 2-29 | | | 0.29 | 75 × | ○ | 72% × |
| Comparative Example 2-30 | | | 0.43 | 82 × | ○ | 70% × |
| Comparative Example 2-31 | - | - | - | 15 ○ | × | 79% × |

Referring to Table 2, the use of the surface-treated spherical silica particles of Synthesis Examples 1 to 5 as secondary battery separator coating compositions has good results in the separator thickness, the combustion test, and the battery characteristics when the application amount is in the range of 0.07 to 0.29 mg/cm² (Examples 2-1 to 2-15).

When the application amount is as small as 0.03 mg/cm² and when the application amount is as large as 0.43 mg/cm², the battery capacity retention rate after 500 charge/discharge cycles is low in the results of the battery characteristic test. When the application amount is as small as 0.03 mg/cm², the separators show poor results in the combustion test.

When the application amount is as small as 0.03 mg/cm², short-circuiting may occur because the effect of the surface-treated spherical silica particles is insufficient. When the application amount is as large as 0.43 mg/cm², the battery characteristics may degrade due to increased internal resistance.

Referring to Table 3, the use of the surface-treated silica particles of Comparative Synthesis Examples 1 to 4 as secondary battery separator coating compositions tends to increase the total thickness of the separator and also results in poor battery characteristics. These silica particles easily aggregate and may thus increase the film thickness when applied to the separator. This may increase the internal resistance to degrade the battery characteristics.

In Comparative Example 2-31, the separator having no silica particles applied thereon shows a poor result in the battery characteristic test. This may be caused by short-circuiting. The separator also shows a poor result in the combustion test.

## Claims

1. A secondary battery separator coating composition comprising surface-treated spherical silica particles having R¹SiO_{3/2} units (wherein R¹ is a substituted or unsubstituted monovalent hydrocarbon group having 1 to 20 carbon atoms) and R²₃SiO_{1/2} units (wherein R² which may be the same or different is a substituted or unsubstituted monovalent hydrocarbon group having 1 to 6 carbon atoms) on surfaces thereof, a median diameter in a volume-based particle size distribution of 0.01 to 0.5 µm, and a circularity of 0.8 to 1.0.

2. A method for manufacturing the secondary battery separator coating composition according to claim 1, the method comprising a step of
subjecting a tetrafunctional silane compound represented by the formula (I):
Si(OR³)₄ (I)
wherein R³ which may be the same or different is a monovalent hydrocarbon group having 1 to 6 carbon atoms, a partial hydrolyzate thereof, or a mixture thereof to hydrolysis and condensation in the presence of a basic substance in a mixture of a hydrophilic organic solvent and water, thereby forming a mixed solvent dispersion of hydrophilic spherical silica particles containing SiO₂ units; then adding a trifunctional silane compound represented by the formula (II):
R¹Si(OR⁴)₃ (II)
wherein R¹ is as defined above and R⁴ which may be the same or different is a monovalent hydrocarbon group having 1 to 6 carbon atoms, a partial hydrolyzate thereof, or a mixture thereof to the mixed solvent dispersion of the hydrophilic spherical silica particles for conducting surface treatment of the hydrophilic spherical silica particles, thereby obtaining a mixed solvent dispersion of first surface-treated spherical silica particles having R¹SiO_{3/2} units (wherein R¹ is as defined above) introduced on the surfaces of the hydrophilic spherical silica particles; and next removing a portion of the hydrophilic organic solvent and water from the mixed solvent dispersion of the first surface-treated spherical silica particles to concentrate the mixed solvent dispersion, thereby obtaining a concentrated mixed solvent dispersion of the first surface-treated spherical silica particles; then adding a silazane compound represented by the formula (III):
R²₃SiNHSiR²₃ (III)
wherein R² is as defined above, a monofunctional silane compound represented by the formula (IV):
R²₃SiX (IV)
wherein R² is as defined above and X is an OH group or a hydrolyzable group, or a mixture thereof to the concentrated mixed solvent dispersion of the first surface-treated spherical silica particles for conducting surface treatment of the first surface-treated spherical silica particles so that R²₃SiO_{1/2} units (wherein R² is as defined above) are introduced on the surfaces of the first surface-treated spherical silica particles, thereby obtaining surface-treated spherical silica particles as second surface-treated spherical silica particles.

3. A secondary battery separator comprising a substrate and a coating of the secondary battery separator coating composition according to claim 1 which is formed on a surface of the substrate or inside pores of the substrate, wherein an amount of the surface-treated spherical silica particles per 1 cm² of the substrate is 0.07 to 0.29 mg.

4. The secondary battery separator according to claim 3, wherein the substrate is a non-woven fabric.

5. A secondary battery comprising the secondary battery separator according to claim 3 or 4.
